# EUROPÄISCHE PATENTSCHRIFT

(11) **EP 1 638 753 B1**
(45) Veröffentlichungstag und Bekanntmachung des Hinweises auf die Patenterteilung: **05.08.2009**
(21) Anmeldenummer: 04739455.6
(22) Anmeldetag: 28.05.2004
(51) Int. Cl.: B29C 45/54, B29C 45/53

(54) **PLASTIFIZIER- UND EINSPRITZVORRICHTUNG**
PLASTICISING AND INJECTING DEVICE
DISPOSITIF DE PLASTIFICATION ET D'INJECTION

(30) Priorität: 28.05.2003 DE 10324629; 29.09.2003 DE 10345609
(43) Veröffentlichungstag der Anmeldung: 29.03.2006
(73) Patentinhaber: Billion S.A.S., 01100 Bellignat (FR)
(72) Erfinder: Cosgun, Dudu, F-01100 Oyonnax (FR)
(74) Vertreter: Jacoby, Georg
(86) Internationale Anmeldenummer: PCT/EP2004/005838
(87) Internationale Veröffentlichungsnummer: WO 2004/106030

(56) Entgegenhaltungen:
- DE-A- 4 401 026
- GB-A- 1 015 092
- US-A- 3 395 424
- US-A- 5 380 186
- PATENT ABSTRACTS OF JAPAN Bd. 0154, Nr. 58 (M-1182), 21. November 1991 (1991-11-21) -& JP 03 197017 A (SEKISUI CHEM CO LTD), 28. August 1991 (1991-08-28)
- PATENT ABSTRACTS OF JAPAN Bd. 1997, Nr. 07, 31. Juli 1997 (1997-07-31) -& JP 09 057801 A (BANDO CHEM IND LTD), 4. März 1997 (1997-03-04)

## Beschreibung

Die Erfindung betrifft eine Plastifizier- und Einspritzvorrichtung für eine Kunststoffspritzgießmaschine gemäß dem Oberbegriff von Patentanspruch 1.

Es sind Spritzgießmaschinen bekannt, bei denen die Funktionen Plastifizieren und Einspritzen von einer sogenannten Schubschnecke gemeinsam ausgeführt werden. Die Schnecke ist drehangetrieben für das Aufschmelzen und Fördern des Kunststoffes. Zum Einspritzen der Kunststoffschmelze in eine Form ist die Schnecke desweiteren axial verschiebbar und verfügt an ihrem vorderen Ende über eine Rückströmsperre. Eine derartige Plastifizier- und Einspritzvorrichtung zeichnet sich durch ihre Einfachheit und ihre Vielseitigkeit im Hinblick auf unterschiedliche Anwendungen aus. Nachteilig an einer derartigen Plastifizier- und Einspritzvorrichtung ist zunächst, dass durch die Rückwärtsbewegung der Schnecke während des Plastifizierens die Homogenität der Schmelze negativ beeinflußt wird, da das Kunststoffgranulat innerhalb eines Zyklus nicht stets die gleiche Schneckenlänge zum Plastifizieren und Homogenisieren zur Verfügung hat. Ausserdem kann die Schnecke während des Einspritzens und in der Nachdruckphase nicht weiterbetrieben werden, was sich negativ auf die Zykluszeit auswirkt. Weiterhin nachteilig ist, dass die Dimensionierung der Schnecke stets ein Kompromiß zwischen der Plastifizierleistung einerseits und dem Einspritzdruck andererseits sein muss.

Zur Behebung der vorgenannten Nachteile ist bei sogenannten Spritzgießcompoundern vorgeschlagen worden, zum Plastifizieren einen kontinuerlich betriebenen Doppelschneckenextruder und diesem nachgeschaltet einen oder mehrere EinspritzKolben-Zylindereinheiten vorzusehen (DE 19828770 A1, WO 86/06321 A1).

Die JP-A-03197017 zeigt eine Plastifizier- und Einspritzvorrichtung mit einem einzigen Schmelzeraum vor der Plastifizierschnecke, der gleichzeitig auch die Funktion einer Einspritzkammer hat. Zum Einspritzen werden die Schnecke und der in der Schnecke angeordnete Kolben in dieser Kammer gleichzeitig nach vorne bewegt. Der Schmelze- und Einspritzraum 31 geht an seinem vorderen Ende in einen Raum 2 mit einem geringeren Durchmesser über, in der der Kolben mit seiner Spitze und der Rückstromsperre am Ende der Einspritzphase eintauchen kann, um einen Nachdruck aufrechtzuerhalten.

Die US-B-3395424 offenbart eine Plastifizier- und Einspritzvorrichtung mit einem als Hohlzylinder ausgebildeten Einspritzkolben, der der Plastifizierschnecke vorgelagert ist, wobei das Innere des Zylinders die Schmelzekammer bildet und am vorderen Ende des Zylinders eine Rückstromsperre zum Öffnen und Schliessen der Schmelzekammer vorgesehen ist.

Die GB-A-1015092 offenbart eine Plastifizier- und Einspritzvorrichtung mit einer Schmelzekammer und einer Einspritzkammer, in der ein Einspritzkolben zum Einspritzen der Schmelze in eine Form nach vorne bewegbar ist. Der Kopf des Einspritzkolbens weist eine nach Art eines Kugelventils funktionierende Rückstromsperre auf, die die Schmelze von der Schmelze- in die Einspritzkammer durchlässt und in die entgegengesetzte Richtung sperrt.

Aus dem Stand der Technik, der deutschen Auslegeschrift DE 1105143 ist eine Spritzgießmaschine bekannt, die ebenfalls eine Aufteilung der Funktionen Plastifizieren einerseits und Einspritzen andererseits vorsieht. Aus diesem Dokument ist nämlich eine Plastifizier- und Einspritzvorrichtung bekannt, die eine in einem Plastifizierzylinder drehangetriebene Plastifizierschnecke, eine Schmelzekammer vor der Plastifizierschnecke zur Aufnahme und Zwischenspeicherung von Kunststoffschmelze, sowie einen der Schmelzekammer nachgeordneten Einspritzzylinder aufweist, in dem ein Einspritzkolben reversierbar geführt ist, wobei der Einspritzkolben und die Plastifizierschnecke koaxial zueinander angeordnet und relativ zueinander axial bewegbar sind.

Nachteilig hieran ist, dass der Einspritzkolben über eine einzige Kugel als Absperrorgan zwischen der Schmelzekammer einerseits und der Einspritzkammer in dem Einspritzzylinder andererseits verfügt. Dies hat zur Folge, dass zwischen der durch die Dimensionierung des Schmelzekanals gegebenen Durchflußrate einerseits und dem von dem Durchmesser der Kugel abhängigen Schließverhalten des Absperrorgans andererseits ein Kompromiß eingegangen werden muss.

Ausgehend hiervon liegt der Erfindung die Aufgabe zugrunde, eine Plastifizier und Einspritzvorrichtung der gattungsgemäßen Art anzugeben, die die zuvor genannten Nachteile vermeidet.

Die Lösung dieser Aufgabe erfolgt durch eine Plastifizier- und Einspritzvorrichtung mit den Merkmalen von Anspruch 1. Vorteilhafte Ausgestaltungen und Weiterentwicklungen finden sich in den Unteransprüchen.

Dadurch, dass der Einspritzkolben ein inneres und ein äußeres Teil aufweist, die relativ zueinander zwischen einer Offenstellung, in der die Kunststoffschmelze von der Schmelzekammer in den Einspritzzylinder fließen kann und einer Schließstellung, in der die Schmelzekammer und der Einspritzzylinder relativ zueinander abgedichtet sind, hin und her bewegbar sind, muss für die Durchflußrate im Gegensatz zum Stand der Technik kein Kompromiß eingegangen werden. Man kann die Anordnungen und die Anzahl von Öffnungen für den Schmelzedurchfluß nahezu beliebig wählen, da das innere Teil und das äußere Teil des Einspritzkolbens aktiv hin- und her bewegbar sind.

Die Bewegung zwischen innerem und äußerem Teil kann durch eine relative Drehbewegung bzw. Winkelbewegung (Anspruch 2) oder durch eine relative Translationsbewegung erfolgen (Anspruch 3). Die Ausgestaltung nach Anspruch 4 hat den Vorteil, dass sämtliche Antriebsaggregate, d.h. also dasjenige für die Rotation der Plastifizierschnecke, dasjenige für die axiale Verschiebung des Einspritzkolbens und dasjenige für die Ausführung der Relativbewegungen von innerem und äußerem Teil des Einspritzkolbens platzsparend am hinteren Ende der Plastifizier- und Einspritzvorrichtung angeordnet werden können. Alternativ dazu können die Antriebsaggregate für den Einspritzkolben auch vor dem Plastifizierzylinder vorgesehen werden, wenn der Einspritzkolben in einem geeigneten Gehäuse vor der Plastifizierschnecke angeordnet wird (Ansprüche 6 bis 8).

Da der Einspritzkolben als Ganzes axial verschiebbar ist, kann die Relativbewegung zwischen innerem und äußerem Teil des Einspritzkolbens an einer beliebigen Stelle auf dem von dem Einspritzkolben überstreichbaren Weg erfolgen, d.h. das Abdichten bzw. die Freigabe für das Durchströmen der Kunststoffschmelze kann an einem beliebigen Punkt auf dem Weg des Einspritzkolbens erfolgen.

Auf einen separaten Einspritzzylinder kann verzichtet werden, wenn der Plastifizierzylinder an seinem vorderen Ende gleichzeitig als Einspritzzylinder ausgebildet ist (Anspruch 5).

Zum Ausgleichen von eventuell beim Einspritzen auftretenden Dekompressionserscheinungen können über einen Abschnitt L am vorderen Ende der Plastifizierschnecke ein Ringspalt vorgesehen werden (Ansprüche 11,12) oder der Einspritzkolben weist in diesem Bereich ein oder mehrere Nuten auf (Ansprüche 13, 14), so dass beim Einspritzvorgang Kunststoffschmelze nachgefüttert werden kann. Alternativ oder ergänzend dazu kann die Plastifizierschnecke gegebenenfalls einen geringen axialen Hub in Spritzrichtung ausführen und/oder die Drehzahl der Plastifizierschnecke kann signifikant erhöht werden.

Nachfolgend soll die Erfindung anhand von Ausführungsbeispielen und unter Bezugnahme auf die Figuren näher erläutert werden; es zeigen:
- Fig.1: Längsschnitt durch eine erste Ausführungsform der Erfindung im Zustand vor dem Einspritzen (Einspritzkolben in hinterer Stellung);
- Fig. 2: wie Figur 1, jedoch im Zustand nach Beendigung des Einspritzens (Einspritzkolben in vorderer Stellung);
- Fig.3a,b: Draufsicht auf den Kopf des Einspritzkolbens mit
a) Offenstellung
b) Schließstellung
- Fig.4a,b: Längsschnitt durch eine Variante der ersten Ausführungsform mit
a) Offenstellung
b) Schließstellung
- Fig.5: Draufsicht auf eine zweite Ausführungform der Erfindung im Zustand vor dem Einspritzen (Einspritzkolben in hinterer Stellung);
- Fig.6: horizontaler Längsschnitt durch die zweite Ausführungsform in der Ebene der Einspritzachse;
- Fig.7: Seitenansicht zur Ausführungsform der Fig.5;
- Fig.8: vertikaler Längsschnitt durch die zweite Ausführungform in der Ebene der Einspritzachse;
- Fig.9a,b: Draufsicht auf den Kopf des Einspritzkolbnes mit
a) Offenstellung
b) Schließstellung
- Fig.10: Längsschnitt durch erste Ausführungsform gemäß Figur 1 mit modifizierter Plastifizierschnecke und modifiziertem Einspritzkolben (Einspritzkolben in hinterer Stellung);
- Fig.11: wie Figur 10, jedoch im Zustand nach Beendigung des Einspritzens (Einspritzkolben in vorderer Stellung);
- Fig.12: Ausführungsform gemäß Figuren 10 und 11 mit demgegenüber modifiziertem Einspritzkolben;
- Fig.13: Querschnitt entlang der Linie A-B in Figur 12.

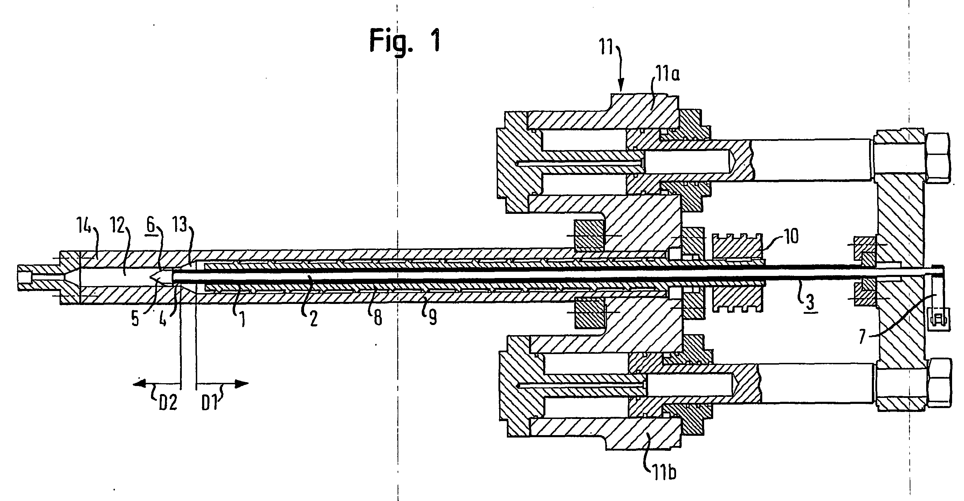

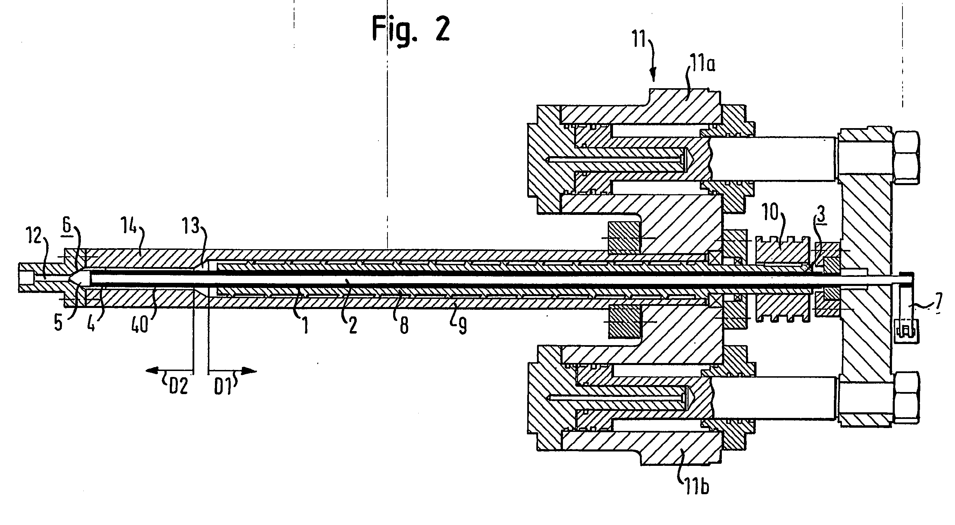

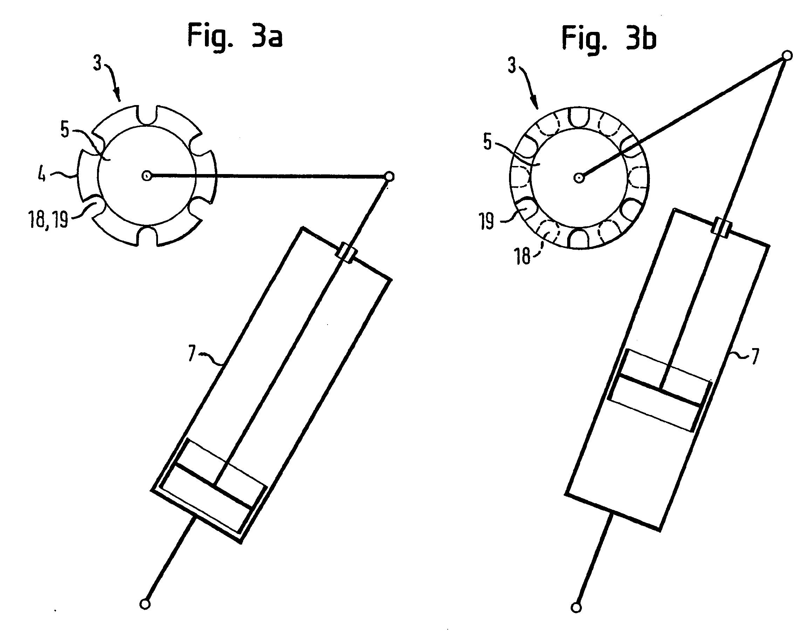

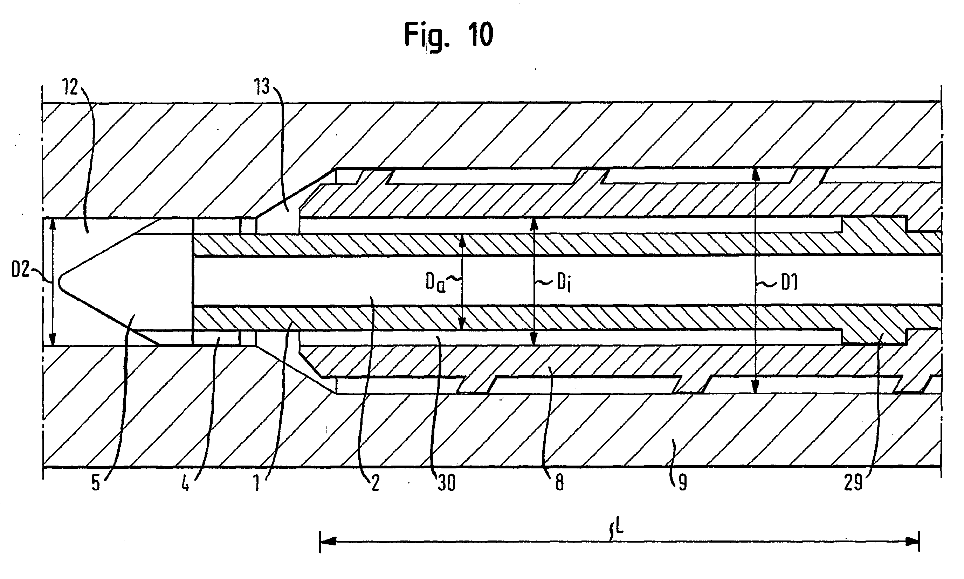

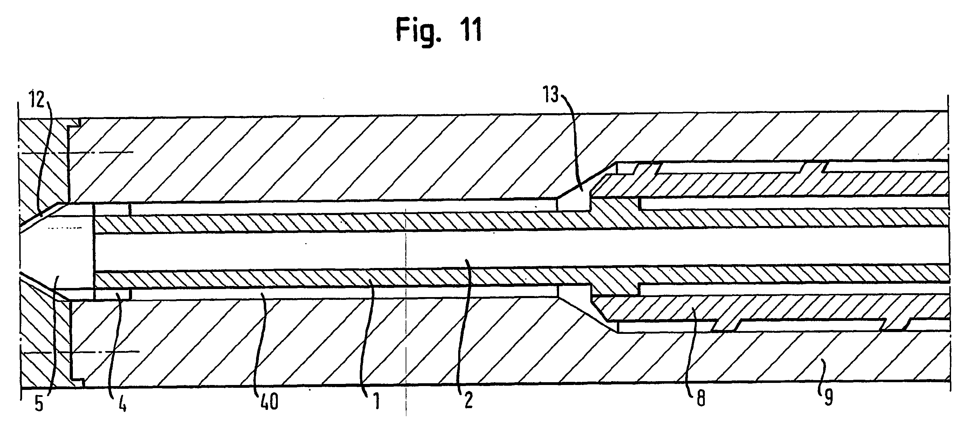

Eine erste Ausführungsform der erfindungsgemäßen Plastifizier- und Einspritzvorrichtung soll anhand der Figuren 1 bis 3 beschrieben werden. Eine Plastifizierschnecke 8 ist über einen Antrieb 10 drehangetrieben in einem Zylinder 9 angeordnet. Innerhalb einer durch die Plastifizierschnecke 8 hindurchgehenden Bohrung befindet sich ein Einspritzkolben 3, bestehend aus einem hohlzylindrischen äußeren Teil 1 und einem als Stange ausgebildeten inneren Teil 2. Der Einspritzkolben 3 ragt jeweils ein geeignetes Stück über das vordere und das hintere Ende der Plastifizierschnecke 8 hinaus. Das hohlzylindrische äußere Teil 1 vefügt an seinem vorderen Ende über ein Endstück 4, beispielsweise nach Art einer Scheibe, mit über den Umfang verteilten Öffnungen 18. Die Stange 2 ist an ihrem vorderen Ende mit einem Endstück 5, beispielsweise ebenfalls in Form einer Scheibe oder eines Konus (wie hier gezeigt) ausgestattet, das über den Umfang verteilte Öffnungen 19 besitzt. Das Endstück 5 der Stange 2 bildet zusammen mit dem Endstück 4 des hohlzylindrischen äußeren Teils 1 den Kopf 6 des Einspritzkolbens 3. Das hohlzylindrische äußere Teil 1 und die Stange 2 sind axial nicht relativ zueinander bewegbar. Die translatorische Relativbewegung ist mechanisch blockiert. Die Stange 2 kann jedoch mittels eines Antriebs 7 um einen bestimmten Winkel gegenüber dem äußeren Teil 1 gedreht werden, um die Öffnungen 18 und 19 in den beiden Endstücken 4 und 5 in eine sich gegenüberliegende Stellung (Offenstellung) - siehe Figur 3a - und eine phasenverschobene Stellung (Schließstellung) - siehe Figur 3b - zu bringen. Der Plastifizierzylinder 9 verfügt über einen ersten, hinteren Abschnitt mit einem ersten Durchmesser D1 entsprechend im wesentlichen dem Durchmesser der Schnecke 8 sowie einen zweiten, vorderen Abschnitt mit einem zweiten Durchmesser D2, der kleiner als D1 ist und der den Einspritzzylinder 14 mit der Einspritzkammer 12 bildet. Dazwischen befindet sich ein Übergangsbereich, in dem sich der Plastifizierzylinder 9 in geeigneter Weise von D1 auf D2 verjüngt (siehe hierzu auch Figuren 10 und 11).

Der Spritzgießzyklus läuft wie folgt ab:
Zu Beginn des Einspritzvorgangs befindet sich der Einspritzkolben 3 in seiner hinteren Position, wie dies in Figur 1 ersichtlich ist. Das hohlzylindrische, äußere Teil 1 und die Stange 2 befinden sich in einer phasenverschobenen Stellung gemäß Figur 3b, d.h. der Fließweg zwischen der Schmelzekammer 13 und der Einspritzkammer 12 ist unterbrochen. Mittels einer Antriebseinrichtung 11, beispielsweise zweier Kolben-Zylinder-Einheiten 11 a und 11 b, wird der Einspritzkolben 3 nach vorne bewegt und verdrängt die in der Einspritzkammer 12 befindliche Kunststoffschmelze in eine hier nicht dargestellte Form. Während dieser Phase des Einspritzens und der sich anschließenden Nachdruckphase kann die Plastifizierschnecke 8 weiter gedreht werden, um neue Kunststoffschmelze in die Schmelzekammer 13 zu fördern.

Wenn der Einspritzvorgang und die sich anschließende Nachdruckphase beendet sind, wird die Stange 2 um einen bestimmten Winkel gegenüber dem äußeren hohlzylindrischen Teil 1 gedreht, wodurch die Öffnungen 18 und 19 in den Endstücken 4 und 5 von diesen beiden Teilen zueinander verschoben werden und eine sich gegenüberliegende Stellung einnehmen, wie sie in Figur 3a gezeigt ist. Nun ist der Fließweg zwischen der Schmelzekammer 13 und der Einspritzkammer 12 freigegeben. Der Einspritzkolben 3 kann zurückgebewegt werden. Durch Rotation der Plastifizierschnecke 8 und Zurückbewegen des Einspritzkolbens 3 kann Kunststoffschmelze von der Schmelzekammer 13 in die Einspritzkammer 12 gelangen. Wenn das für den Spritzgießzyklus erforderliche Schußvolumen in der Einspritzkammer 12 erreicht ist, wird die Rückwärtsbewegung des Einspritzkolbens 3 gestoppt und die Stange 2 um einen bestimmten Winkel in die entgegengesetzte Richtung wie zuvor gedreht, damit die Öffnungen wieder die phasenverschobene Stellung (Schließstellung) einnehmen, wie sie in der Figur 3b gezeigt ist, und somit der Fließweg zwischen der Schmelzekammer 13 und der Einspritzkammer 12 schmelzedicht blockiert wird. Nunmehr ist der Zustand von Figur 1 wieder erreicht und der Einspritzkolben 3 kann erneut nach vorne verfahren werden, um das Einspritzen der Schmelze in eine Form zu bewirken.

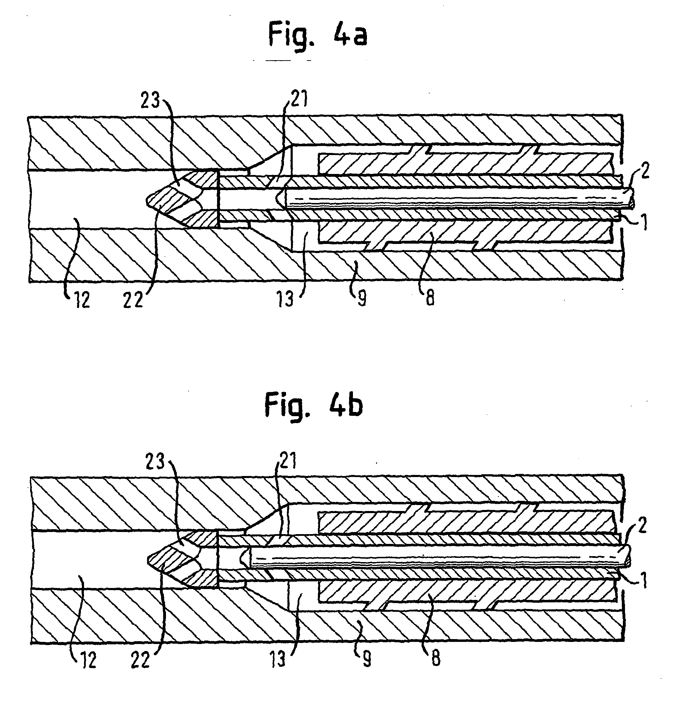

Das Verschließen und Freigeben des Fließweges zwischen der Schmelzekammer 13 und der Einspritzkammer 12 kann anstelle der oben beschriebenen Drehbewegung auch durch eine translatorische Relativbewegung zwischen dem hohlzylindrischen äußeren Teil 1 und der Stange 2 erfolgen (siehe Figuren 4a und 4b). Das äußere hohlzylindrische Teil 1 verfügt in diesem Fall über hintere Bohrungen 21 und über ein Kopfstück 22 mit vorderen Bohrungen 23. Im Gegensatz zu dem oben beschriebenen Beispiel sind nunmehr an sich bekannte Antriebe für eine axiale Relativbewegung zwischen der Stange 2 und dem hohlzylindrischen äußeren Teil vorgesehen. Durch Vorschieben und Zurückziehen der Stange 2 können die hinteren Bohrungen 21 verschlossen oder freigegeben und auf diese Weise auch der Fließweg zwischen der Schmelzekammer 13 und der Einspritzkammer 12 verschlossen oder freigegeben werden. Der Spritzgießzyklus läuft wie oben im Zusammenhang mit den Figuren 1 bis 3 beschrieben ab, wobei eine Position mit sich gegenüberliegenden Öffnungen (Offenstellung) der zurückgezogenen Position der Stange 2 (Fig 4a) und eine Position mit zueinander phasenverschobenen Öffnungen (Schließstellung) der vorgeschobenen Position der Stange 2 entspricht (Fig.4b).

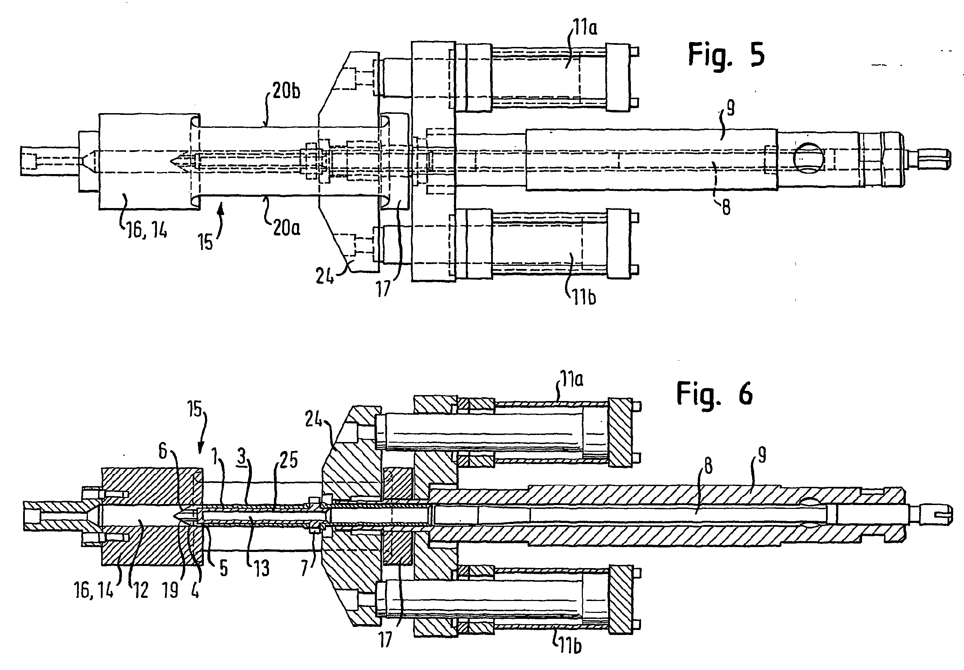

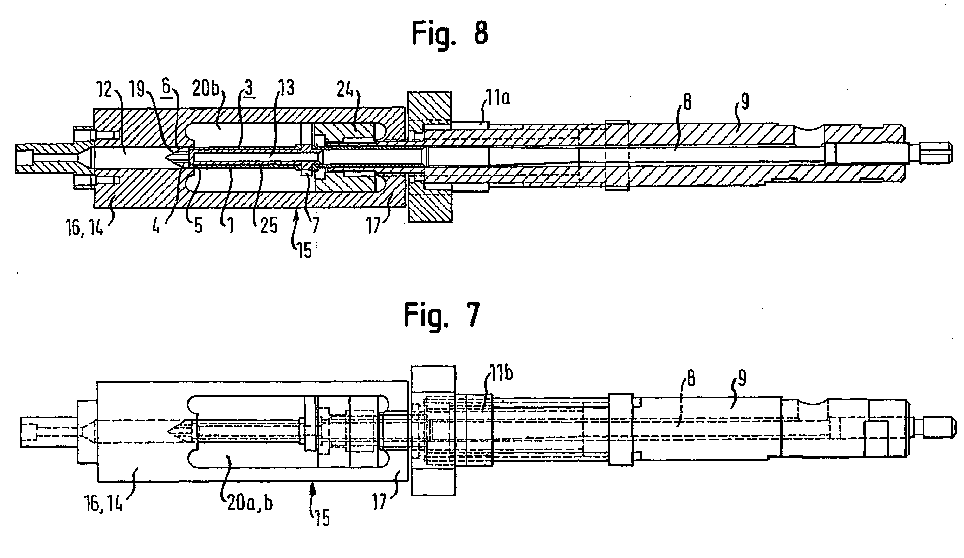

Eine zweite Ausführungsform der erfindungsgemäßen Plastifizier- und Einspritzvorrichtung soll nachfolgend anhand der Figuren 5 bis 9 beschrieben werden. Funktional gleiche Teile wie bei der ersten Ausführungsform sind mit demselben Bezugszeichen versehen. Die Plastifizierschnecke 8 ist drehangetrieben in einem Plastifizierzylinder 9 angeordnet. Im Unterschied zum ersten Ausführungsbeispiel ist der Einspritzkolben 3 nicht in einer Bohrung im Inneren der Plastifizierschnecke 8, sondern vor dieser in einem separaten Gehäuse 15 angeordnet, das an der Vorderseite des Plastifizierzylinders 9 befestigt ist. Dieses Gehäuse 15 verfügt über einen vorderen Abschnitt 16, der als Einspritzzylinder 14 ausgebildet ist, einen hinteren Abschnitt 17, in dem der hintere Teil des Einspritzkolbens 3 axial verschieblich ist, sowie über zwei sich gegenübeliegende, längliche und parallel zum Einspritzkolben 3 verlaufende Ausnehmungen 20a und 20b, durch die eine Traverse 24 verläuft, an der der Einspritzkolben 3 befestigt ist und die mittels zweier Kolben-Zylinder-Einheiten 11 a und 11 b axial verfahren werden kann.

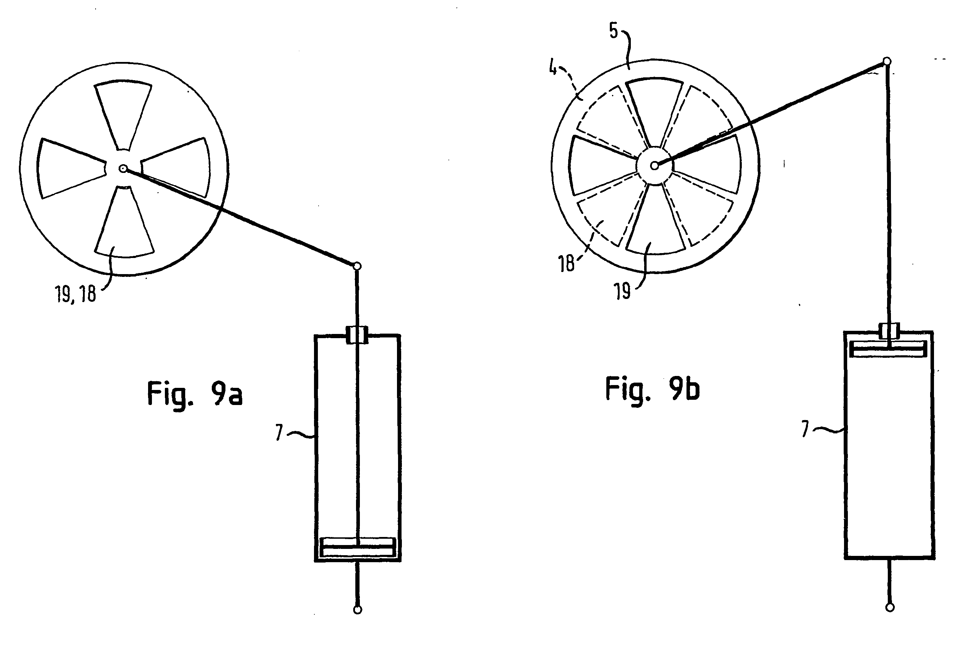

Der Einspritzkolben 3 wird von einem hohlzylindrischen äusseren Teil 1 und einem hohlzylindrischen inneren Teil 25 gebildet. Der hohlzylindrische äussere Teil 1 verfügt über ein vorderes Endstück 4 mit Öffnungen 19 und der innere hohlzylindrische Teil 25 an seinem vorderen Endstück 5 über gleiche Öffnungen 18. Die beiden hohlzylindrischen Teile 1 und 25 sind axial nicht relativ zueinander bewegbar. Die translatorische Relativbewegung ist mechanisch blockiert. Das innere Teil 25 kann jedoch mittels eines Antriebs 7 um einen bestimmten Winkel gegenüber dem äußeren Teil 1 gedreht werden, um die Öffnungen 18 und 19 in eine sich gegenüberliegende Stellung (Offenstellung) - siehe Figur 9a - und eine phasenverschobene Stellung (Schließstellung) - siehe Figur 9b - zu bringen. Die Schmelzekammer 13 befindet sich im Innern des hohlzylindrischen inneren Teils 25.

Der Spritzgießzyklus läuft wie beim ersten Ausführungsbeispiel ab.
Zu Anfang befindet sich der Einspritzkolben 3 in seiner hinteren Position (entsprechend den Figuren 5 bis 8). Die Öffnungen 19 und 18 sind phasenverschoben zueinander positioniert, wie in Figur 9b dargestellt, so dass der Fließweg zwischen der Schmelzekammer 13 im Inneren des hohlzylindrischen inneren Teils 25 und der Einspritzkammer 12 unterbrochen ist. Mittels der Kolben-Zylinder-Einheiten 11a und 11 b wird die Traverse 24 und mit ihr der Einspritzkolben 3 nach vorne bewegt und die Schmelze aus der Einspritzkammer 12 in eine hier nicht dargestellte Form eingespritzt. Während des Einspritzens und der sich anschließenden Nachdruckphase kann die Plastifizierschnecke 8 weiter gedreht werden, um neue Kunststoffschmelze in die Schmelzekammer 13 zu fördern.
Wenn der Einspritzvorgang und die sich anschließende Nachdruckphase beendet sind, wird das hohlzylindrische innere Teil 25 um einen bestimmten Winkel gegenüber dem äußeren hohlzylindrischen Teil 1 gedreht, wodurch die Öffnungen 18 und 19 in den Endstücken 4 und 5 von diesen beiden Teilen zueinander verschoben werden und eine sich gegenüberliegende Stellung einnehmen, wie sie in Figur 9a gezeigt ist. Nun ist der Fließweg zwischen der Schmelzekammer 13 im Inneren des hohlzylindrischen Teils 25 und der Einspritzkammer 12 freigegeben. Der Einspritzkolben 3 kann zurückbewegt werden. Durch Rotation der Plastifizierschnecke 8 wird Kunststoffschmelze zu dem Einspritzkolben 3 gefördert. Die Kunststoffschmelze fließt vom vorderen Ende der Plastifizierschnecke 8 in das Innere des Einspritzkolbens 3, genauer gesagt in das Innere des hohlzylindrischen inneren Teils 25 des Einspritzkolbens und somit in die Schmelzekammer 13. Gegebenenfalls können zwischen dem vorderen Ende der Plastifzierschnecke 8 und dem hinteren Ende des Einspritzkolbens 3 geeignete Übergangsstücke vorgesehen werden, um das Fließen der Kunststoffschmelze zu optimieren. Durch Zurückbewegen des Einspritzkolbens 3 kann Kunststoffschmelze von der Schmelzekammer 13 in die Einspritzkammer 12 gelangen. Wenn das für den Spritzgießzyklus erforderliche Schußvolumen in der Einspritzkammer 12 erreicht ist, wird die Rückwärtsbewegung des Einspritzkolbens 3 gestoppt und das hohlzylindrische innere Teil 25 um einen bestimmten Winkel in die entgegengesetzte Richtung wie zuvor gedreht, damit die Öffnungen wieder die phasenverschobene Stellung (Schließstellung) einnehmen, wie sie in der Figur 9b gezeigt ist, und somit der Fließweg zwischen der Schmelzekammer 13 und der Einspritzkammer 12 schmelzedicht blockiert wird. Nunmehr ist der Zustand von Figur 5 bis 8 wieder erreicht und die Traverse 24 kann erneut nach vorne verfahren werden, um den Einspritzkolben 3 nach vorne zu bewegen und das Einspritzen der Schmelze in eine Form zu bewirken.

Bedarfsweise kann der Einspritzkolben 3 auch einstückig ausgebildet sein. In diesem Fall wird an seinem vorderen Ende eine geeignete Rückströmsperre zum Freigeben und Verschließen des Fließweges zwischen der Schmelzekammer 13 und der Einspritzkammer 12 angebracht.

Um während des Einspritzvorgangs in der Schmelzekammer 13 und im Ringspalt 40 zwischen dem Einspritzkolben 3 und dem Einspritzzylinder 14 eventuell auftretende Dekompressionserscheinungen zu minimieren oder gegebenenfalls ganz zu vermeiden, können verschiedene Maßnahmen vorgesehen werden. Zum einen kann vorgesehen werden, die Plastifizierschnecke 8 bedarfsweise mittels geeigneter und an sich bekannter Linearantriebsmittel um einen geringen Hub in axialer Richtung zu verfahren. Alternativ dazu oder gegebenenfalls in Kombination mit dieser axialen Bewegung kann die Drehzahl der Plastifizierschnecke 8 auf ein geeignetes Maß erhöht werden, um die Plastifizierleistung zu steigern. Somit kann in relativ kurzer Zeit eine genügend große Menge an Kunststoffschmelze nachgeliefert werden, um die Schmelzekammer 13 sowie den Ringspalt 40 zwischen dem Einspritzkolben 3 und dem Einspritzzylinder 14 mit Kunststoffschmelze gefüllt zu halten.

Eine weitere Möglichkeit, beim Einspritzvorgang auftretende Dekompressionserscheinungen in der Schmelzekammer 13 sowie im Ringspalt 40 zu vermeiden, ist in den Figuren 10 und 11 dargestellt. Auf einer Länge L verfügt die hohlzylindrische Plastifizierschnecke 8 über einen Innendurchmesser Dᵢ, der größer ist als der Aussendurchmesser Dₐ des Einspitzkolbens, so daß in diesem Bereich ein Ringspalt 30 gebildet wird, der beim Dosiervorgang ebenfalls mit Kunststoffschmelze gefüllt wird. Um diese Kunststoffschmelze beim Einspritzvorgang aus dem Ringspalt 30 verdrängen und mit nach vorne bewegen zu können, verfügt der Einspritzkolben 3 an geeigneter Stelle um einen als Kolben fungierenden, auf den Innendurchmesser Dᵢ der hohlzylindrischen Plastifizierschnecke verbreiterten Abschnitt 29. Die Länge und die Breite des Ringspalts 30 sind dem jeweiligen Anwendungsfall entsprechend einzustellen.

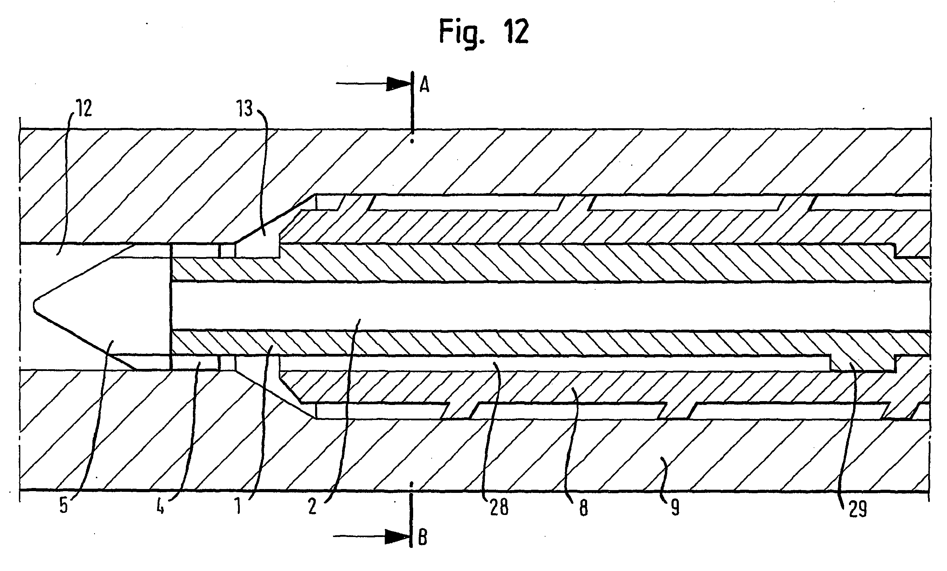

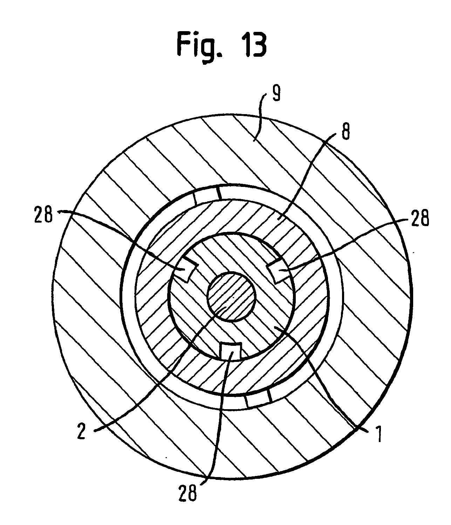

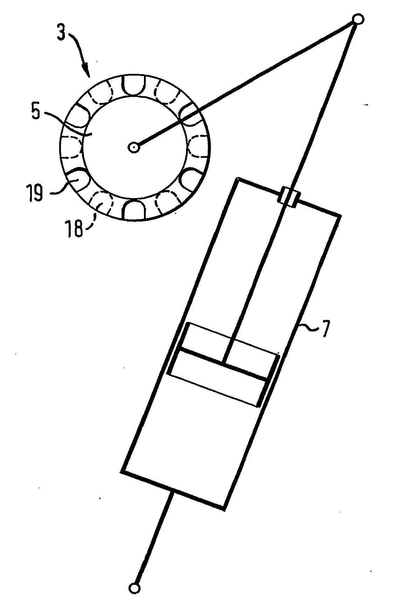

In einer weiteren Alternative (siehe Figuren 12 und 13) kann der Einspritzkolben 3 vor dem als Kolben fungierenden Abschnitt 29 auch einen Aussendurchmesser entsprechend dem Innendurchmesser der hohlzylindrischen Plastifizierschnecke aufweisen, d.h. Dₐ = Dᵢ, wenn in der Aussenseite des Einspritzkolbens Nuten 28 zur Aufnahme von Kunststoffschmelze vorgesehen sind. Die Anzahl der über den Umfang verteilten Nuten 28, deren Form und Querschnitt sowie deren axiale Länge sind vom Fachmann je nach Anwendungsfall in geeigneter Weise auswählbar.

Die Ausgestaltungen der Plastifizierschnecke 8 und des Einspritzkolbens 3 gemäß den Figuren 10 bis 13 können auch bei der Variante der ersten Ausführungsform der Erfindung, wie sie in den Figuren 4a und 4b gezeigt ist, vorgesehen werden.

Zur Vermeidung von Totzonen kann das vordere Ende der Plastifizierschnecke 8 bei allen Ausführungsvarianten auch konisch ausgebildet sein, wie dies beispielhaft in den Figuren 10 bis 12 dargestellt ist.

Ferner kann in den Ausführungsformen gemäß den Figuren 10 bis 12 die Drehzahl der Plastifizierschnecke in der Einspritzphase gegebenenfalls erhöht werden, um auch bei diesen Ausführungsformen in der Einspritzphase die Plastifizierleistung zu steigern.

### Bezugszeichenliste

- 1: Äußeres hohlzylindrisches Teil
- 2: Stange (inneres zylindrisches Teil)
- 3: Einspritzkoben
- 4: Vorderer Endabschnitt von Teil 1
- 5: Vorderes Endstück von Teil 2
- 6: Kopf des Einspritzkolbens
- 7: Antrieb für Stange 2
- 8: Plastifizierschnecke
- 9: Plastifizierzylinder
- 10: Drehantrieb für Plastifizierschnecke
- 11 a,b: Linearantrieb für Einspritzkolben
- 12: Einspritzkammer
- 13: Schmelzekammer
- 14: Einspritzzylinder
- 15: Gehäuse
- 16: Vorderer Abschnitt des Gehäuses 15 (= Einspritzzylinder 14)
- 17: Hinterer Abschnitt des Gehäuses 15
- 18, 19: Öffnungen
- 20a,b: Seitliche Ausnehmungen im Gehäuse 15
- 21: Hintere Bohrungen
- 22: Kopfstück
- 23: Vordere Bohrungen
- 24: Traverse
- 25: Hohlzylindrischer innerer Teil des Einspritzkolbens 3 (= Schmelzekammer 13)
- 28: Nuten im Einspritzkolben
- 29: Kolben (Verbreiterter Abschnitt des Einspritzkolbens 3)
- 30: Ringspalt zwischen Einspritzkolben und Plastifizierschnecke
- 40: Ringspalt zwischen Einspritzkolben und Einspritzzylinder

## Patentansprüche

1. Plastifizier- und Einspritzvorrichtung für eine Kunststoffspritzgießmaschine mit einer in einem Plastifizierzylinder (9) drehangetriebenen Plastifizierschnecke (8), einer Schmelzekammer (13) vor der Plastifizierschnecke (8) zur Aufnahme und Zwischenspeicherung von Kunststöffschmelze, einem der Schmelzekammer (13) nachgeordneten Einspritzzylinder (14) mit einer Einspritzkammer (12), in der ein Einspritzkolben (3) reversierbar geführt ist, wobei der Einspritzkolben (3) und die Plastifizierschnecke (8) koaxial zueinander angeordnet und relativ zueinander axial bewegbar sind,
**dadurch gekennzeichnet,**
**dass** der Einspritzkolben (3) ein inneres Teil (2, 25) und ein äußeres Teil (1, 2) aufweist, die relativ zueinander zwischen einer Offenstellung, in der Kunststoffschmelze von der Schmelzekammer (13) in die Einspritzkammer (12) fließen kann und einer Schließstellung, in der die Schmelzekammer (13) und die Einspritzkammer (12) relativ zueinander abgedichtet sind, hin und her bewegbar sind.

2. Vorrichtung nach Anspruch 1,
**dadurch gekennzeichnet,**
**dass** das innere Teil (1) und das äußere Teil (2, 25) jeweils ein Endstück (4,5) mit einer oder mehreren Öffnungen (18, 19) aufweisen, wobei die Öffnungen (18, 19) durch eine Winkelbewegung zwischen innerem (1) und äußerem Teil (2, 25) mindestens in zwei Stellungen bringbar sind, nämliche eine Offenstellung, in der sich die Öffnungen (18, 19) gegenüberliegen und eine Schließstellung, in der die Öffnungen (18, 19) phasenverschoben sind.

3. Vorrichtung nach Anspruch 1,
**dadurch gekennzeichnet,**
**dass** das äußere Teil (1) an seinem vorderen Ende (22) mit vorderen (23) und hinteren (21) Bohrungen versehen ist, über die das hohlzylindrische Innere des äußeren Teils (1) einerseits mit der Einspritzkammer (12) und andererseits mit der Schmelzkammer (13) in Fließverbindung bringbar ist, und dass das innere Teil (2) derart in dem äußeren Teil (1) translatorisch bewegbar ist, dass die hinteren Bohrungen (21) von dem inneren Teil (2) wahlweise verschlossen oder freigegeben werden können.

4. Vorrichtung nach einem der Ansprüche 1 bis 3,
**dadurch gekennzeichnet,**
**dass** der Einspritzkolben (3) durch eine Bohrung im Inneren der Plastifizierschnecke (8) verläuft und sowohl mit seinem vorderen Ende als auch mit seinem hinteren Ende aus der Plastifizierschnecke (8) herausragt, und dass an seinem hinteren Ende Antriebsmittel (7) für eine Winkel- und/oder Translationsbewegung zwischen dem inneren Teil (2, 25) und dem äußeren Teil (1) vorgesehen sind.

5. Vorrichtung nach einem der Ansprüche 1 bis 4,
**dadurch gekennzeichnet,**
**dass** der Plastifizierzylinder (9) an seinem vorderen Ende einen ersten Abschnitt mit einem ersten Durchmesser aufweist, der die Schmelzekammer (13) bildet, und dass der Plastifizierzylinder (9) einen sich in Spritzrichtung anschließenden zweiten-Abschnitt mit einem zweiten Durchmesser aufweist, der geringer ist als der erste Durchmesser und der den Einspritzzylinder (14) mit der Einspritzkammer (12) bildet.

6. Vorrichtung nach einem der Ansprüche 1 bis 3,
**dadurch gekennzeichnet,**
**dass** der Einspritzkolben (3) der Plastifizierschnecke (8) vorgelagert ist, und dass die Schmelzekammer (13) zur Aufnahme und Zwischenspeicherung der Kunststoffschmelze im Inneren des inneren Teils (2) angeordnet ist.

7. Vorrichtung nach Anspruch 6,
**dadurch gekennzeichnet**,
das hintere Teil des Einspritzkolbens (3), insbesondere der äußere Teil (1) des Einspritzkolbens (3), in einer der Plastifizierschnecke (8) vorgelagerten Hülse oder einer entsprechenden Verlängerung des Plastifizierzylinders axial verschieblich ist.

8. Vorrichtung nach Anspruch 6 oder 7,
**dadurch gekennzeichnet,**
**dass** der Einspritzkolben (8) in einem vor dem Plastifizierzylinder (9) angeordneten Gehäuse (15) axial verschieblich ist, wobei das Gehäuse (15) einen hinteren Abschnitt (17) aufweist, in dem der hintere Teil des Einspritzkolbens (3), insbesondere der äußere Teil (1) des Einspritzkolbens (3) axial verschieblich ist, wobei das Gehäuse (15) weiters einen vorderen Abschnitt (16) aufweist, der als Einspritzzylinder (14) ausgebildet ist, wobei das Gehäuse (15) zwischen dem vorderen (16) und dem hinteren Abschnitt (17) eine oder mehrere längliche, parallel zum Einspritzkolben (3) verlaufende Ausnehmungen (20a,b) aufweist, durch die Teile der Antriebsmittel für den Hub des Einspritzkolbens geführt sind, beispielsweise eine Traverse (24) und wobei die axiale Erstreckung dieser Ausnehmungen (20a,b) wenigstens entsprechend dem Hub des Einspritzkolbens (3) gewählt ist.

9. Vorrichtung nach einem der Ansprüche 1 bis 8,
**dadurch gekennzeichnet,**
**dass** das innere Teil (2, 25) des Einspritzkolbens gegenüber dem äußeren Teil zwischen Schließ- und Offenstellung bewegbar ist.

10. Vorrichtung nach einem der Ansprüche 2 bis 9,
**dadurch gekennzeichnet,**
**dass** die Öffnungen (18, 19) in den Endstücken (4, 5) von innerem (1) und äußerem Teil (2, 25) kreisförmig und/oder kreissegmentförmig ausgebildet sind.

11. Vorrichtung nach einem der Ansprüche 4 bis 10,
**dadurch gekennzeichnet,**
**dass** die Bohrung der Plastifizierschnecke (8) an ihrem vorderen Ende über eine Länge L einen verbreiterten Abschnitt mit einem Durchmesser Di aufweist, der größer ist als der Aussendurchmesser Da des Einspritzkolbens, so dass ein Ringspalt (30) gebildet wird.

12. Vorrichtung nach Anspruch 11,
**dadurch gekennzeichnet,**
**dass** der Einspritzkolben (3) einen den Ringspalt (30) überstreichbaren Kolben (29) aufweist.

13. Vorrichtung nach einem der Ansprüche 4 bis 10,
**dadurch gekennzeichnet,**
**dass** der Einspritzkolben (3) eine oder mehrere Nuten (28) aufweist, die sich im zurückgefahrenen Zustand des Einspritzkolbens (3) über eine Länge L in die Plastifizierschnecke (8) erstrecken.

14. Vorrichtung nach Anspruch 13,
**dadurch gekennzeichnet,**
**dass** die Nuten (28) einen U-förmigen, einen rechteckförmigen oder einen dreieckförmigen Querschnitt aufweisen und im wesentlichen parallel zur Längsachse des Einspritzkolbens (3) verlaufen.

15. Vorrichtung nach einem der Ansprüche 1 bis 14,
**dadurch gekennzeichnet,**
**dass** die Drehzahl der Plastifizierschnecke (8) zum Ausgleichen von Dekompressionserscheinungen beim Einspritzvorgang um einen signifikanten Wert erhöhbar ist.

16. Vorrichtung nach einem der Ansprüche 1 bis 15,
**dadurch gekennzeichnet,**
**dass** die Drehzahl der Plastifizierschnecke (8) zum Ausgleichen von Dekompressionserscheinungen beim Einspritzvorgang um einen geringen Hub nach vorne verfahrbar ist.

## Claims

1. A plasticising and injection device for a plastics injection-moulding machine with a plasticising screw (8) rotationally driven in a plasticising cylinder (9), a melt chamber (13) in front of the plasticising screw (8) for the accommodation and the intermediate storage of plastic melt, an injection cylinder (14) downstream from the melt chamber (13) and provided with an injection chamber (12) in which an injection plunger (3) is reversibly guided, wherein the injection piston (3) and the plasticising screw (8) are coaxially disposed and can move axially with respect to each other,
**characterised in that** the injection plunger (3) comprises an inner part (2, 25) and an outer part (1, 2), which can move to and fro in relation to each other between an open position, in which the plastic melt can flow from the melt chamber (13) into the injection chamber (13), and a closed position, in which the melt chamber (13) and the injection chamber (12) are sealed from each other.

2. A device according to Claim 1,
**characterised in that** the inner part (1) and the outer part (2, 25) each comprise an end piece (4, 5) with one or more openings (18, 19), wherein the openings (18, 19) can be moved by an angular motion between the inner part (1) and the outer part (2, 25) at least into two positions, namely an open position in which the openings (18, 19) are opposite each other and a closed position in which the openings (18, 19) are phase-shifted.

3. A device according to Claim 1,
**characterised in that** the outer part (1) is provided at its front end (22) with front holes (23) and rear holes (21), via which the hollow-cylindrical interior of the outer part (1) can be brought into flow communication firstly with the injection chamber (12) and secondly with the melt chamber (13),
and **in that** the inner part (2) can be moved in translation in the outer part (1) so that the rear holes (21) can be optionally closed or released by the inner part (2).

4. A device according to one of Claims 1 to 3,
**characterised in that** the injection plunger (3) runs through a hole in the interior of the plasticising screw (8) and protrudes by its front end and also its rear end from the plasticising screw (8),
and **in that** on its rear end drive means (7) for an angular and/or translational movement are provided between the inner part (2, 25) and the outer part (1).

5. A device according to one of Claims 1 to 4,
**characterised in that** at its front end the plasticising cylinder (9) comprises a first portion with a first diameter that forms the melt chamber (13),
and **in that** the plasticising cylinder (9) comprises a second portion following in the injection direction with a second diameter that is smaller than the first diameter and that forms the injection cylinder (14) with the injection chamber (12).

6. A device according to one of Claims 1 to 3,
**characterised in that** the injection plunger (3) is upstream from the plasticising screw (8),
and **in that** the melt chamber (13) for the accommodation and intermediate storage of the plastic melt is disposed in the interior of the inner part (2).

7. A device according to Claim 6,
**characterised in that** the rear part of the injection plunger (3), in particular the outer part (1) of the injection plunger (3), is axially displaceable in a sleeve in front of the plasticising screw (8) or a corresponding prolongation of the plasticising cylinder.

8. A device according to Claim 6 or 7,
**characterised in that** the injection plunger (8) is axially displaceable in a housing (15) disposed in front of the plasticising cylinder (9), wherein the housing (15) comprises a rear portion (17) in which the rear part of the injection plunger (3), in particular the outer part (1) of the injection plunger (3), is axially displaceable,
wherein the housing (15) also comprises a front portion (16) that is designed as an injection cylinder (14), wherein the housing (15) between the front portion (16) and the rear portion (17) comprises one or more elongate recesses (20a, b) running parallel to the injection plunger (3) by which parts of the drive means for the travel of the injection plunger are guided, for example a cross bar, (24), and wherein the axial extension of these recesses (20a, b) is chosen at least to correspond to the travel of the injection plunger (3).

9. A device according to one of Claims 1 to 8,
**characterised in that** the inner part (2, 25) of the injection plunger is moveable in relation to the outer part between the closed and open positions.

10. A device according to one of Claims 2 to 9,
**characterised in that** the openings (18, 19) in the end pieces (4, 5) of the inner part (1) and the outer part (2, 25) are designed as circles and/or segments of a circle.

11. A device according to one of Claims 4 to 10,
**characterised in that** the bore of the plasticising screw (8) at its front end comprises a widened portion with a diameter Di that is larger than the external diameter Da of the injection plunger, so that an annular gap (30) is formed.

12. A device according to Claim 11,
**characterised in that** the injection plunger (3) comprises a plunger (29) that can sweep over the annular gap (30).

13. A device according to one of Claims 4 to 10,
**characterised in that** the injection plunger (3) comprises one or more grooves (28) that extend over a length L into the plasticising screw (98) in the retracted state of the injection plunger (3).

14. A device according to Claim 13,
**characterised in that** the grooves (28) comprise a U-shaped, a rectangular of a triangular cross section and extend substantially parallel to the longitudinal axis of the injection plunger (3).

15. A device according to one of Claims 1 to 14,
**characterised in that** the rotational speed of the plasticising screw (8) for compensating decompression phenomena during the injection operation can be increased by a significant value.

16. A device according to one of Claims 1 to 15,
**characterised in that** the rotational speed of the plasticising screw (8) for compensating decompression phenomena during the injection procedure can travel forwards by a small distance.

## Revendications

1. Dispositif de plastification et d'injection pour une presse d'injection de plastique avec une vis de plastification (8) entraînée en rotation dans un cylindre de plastification (9), une chambre de fusion (13) devant la vis de plastification (8) pour la réception et le stockage intermédiaire de plastique fondu, un cylindre d'injection (14) disposé en aval de la chambre de fusion (13) avec une chambre d'injection (12), dans laquelle un piston d'injection (3) est guidé de manière réversible, le piston d'injection (3) et la vis de plastification (8) étant disposés coaxialement l'un à l'autre et pouvant être déplacés axialement l'un par rapport à l'autre,
**caractérisé en ce**
**que** le piston d'injection (3) présente une partie (2, 25) intérieure et une partie (1, 26) extérieure qui peuvent être déplacées alternativement l'une par rapport à l'autre entre une position ouverte, dans laquelle du plastique fondu peut couler de la chambre de fusion (13) à la chambre d'injection (12) et une position fermée, dans laquelle la chambre de fusion (13) et la chambre d'injection (12) sont rendues étanches l'une par rapport à l'autre.

2. Dispositif selon la revendication 1,
**caractérisé en ce**
**que** la partie (1) intérieure et la partie (2, 25) extérieure présentent chacune une pièce terminale (4, 5) avec une ou plusieurs ouvertures (18, 19), les ouvertures (18, 19) pouvant être amenées par un mouvement angulaire entre la partie (1) intérieure et la partie (2, 25) extérieure au moins dans deux positions, à savoir une position ouverte, dans laquelle les ouvertures (18, 19) se font face et une position fermée, dans laquelle les ouvertures (18, 19) sont décalées en phase.

3. Dispositif selon la revendication 1,
**caractérisé en ce**
**que** la partie (1) extérieure est pourvue sur son extrémité (22) avant de perçages avant (23) et arrière (21), par le biais desquels l'intérieur cylindrique creux de la partie (1) extérieure peut être amené en liaison d'écoulement d'une part avec la chambre d'injection (12) et d'autre part avec la chambre de fusion (13), et en ce que la partie (2) intérieure peut être déplacée dans la partie (1) extérieure par translation de telle sorte que les perçages (21) arrière puissent être fermés ou libérés au choix par la partie (2) intérieure.

4. Dispositif selon l'une quelconque des revendications 1 à 3,
**caractérisé en ce**
**que** le piston d'injection (3) s'étend par un perçage à l'intérieur de la vis de plastification (8) et dépasse avec son extrémité avant ainsi qu'avec son extrémité arrière de la vis de plastification (8), et en ce que des moyens d'entraînement (7) pour un mouvement angulaire et/ou translatoire entre la partie (2, 25) intérieure et la partie (1) extérieure sont prévus sur son extrémité arrière.

5. Dispositif selon l'une quelconque des revendications 1 à 4,
**caractérisé en ce**
**que** le cylindre de plastification (9) présente sur son extrémité avant une première section avec un premier diamètre qui forme la chambre de fusion (13) et en ce que le cylindre de plastification (9) présente une seconde section se raccordant dans le sens d'injection avec un second diamètre qui est plus petit que le premier diamètre et qui forme le cylindre d'injection (14) avec la chambre d'injection (12).

6. Dispositif selon l'une quelconque des revendications 1 à 3,
**caractérisé en ce**
**que** le piston d'injection (3) est monté en amont de la vis de plastification (8) et en ce que la chambre de fusion (13) pour la réception et le stockage intermédiaire du plastique fondu est disposée à l'intérieur de la partie (2) intérieure.

7. Dispositif selon la revendication 6,
**caractérisé en ce**
**que** la partie arrière du piston d'injection (3), en particulier la partie (1) extérieure du piston d'injection (3) est mobile axialement dans une douille logée en amont de la vis de plastification (8) ou un prolongement correspondant du cylindre de plastification.

8. Dispositif selon la revendication 6 ou 7,
**caractérisé en ce**
**que** le piston d'injection (8) est mobile axialement dans un boîtier (15) disposé devant le cylindre de plastification (9), le boîtier (15) présentant une section (17) arrière, dans laquelle la partie arrière du piston d'injection (3), en particulier la partie (1) extérieure du piston d'injection (3) est mobile axialement, le boîtier (15) présentant en outre une section (16) avant qui est réalisée comme un cylindre d'injection (14), le boîtier (15) entre la section avant (16) et la section arrière (17) présentant un ou plusieurs évidements (20a, b) oblongs, s'étendant parallèlement au piston d'injection (3), par lesquels sont guidées des parties des moyens d'entraînement pour la course du piston d'injection, par exemple une traverse (24) et le développement axial de ces évidements (20a, b) étant choisi au moins selon la course du piston d'injection (3).

9. Dispositif selon l'une quelconque des revendications 1 à 8,
**caractérisé en ce**
**que** la partie (2, 25) intérieure du piston d'injection peut être déplacée par rapport à la partie extérieure entre une position fermée et ouverte.

10. Dispositif selon l'une quelconque des revendications 2 à 9,
**caractérisé en ce**
**que** les ouvertures (18, 19) dans les pièces terminales (4, 5) des parties intérieure (1) et extérieure (2, 25) sont réalisées en forme de cercle et/ou de segment de cercle.

11. Dispositif selon l'une quelconque des revendications 4 à 10,
**caractérisé en ce**
**que** le perçage de la vis de plastification (8) présente sur son extrémité avant sur une longueur L une section élargie avec un diamètre Di qui est supérieur au diamètre extérieur Da du piston d'injection de sorte qu'une fente annulaire (30) soit formée.

12. Dispositif selon la revendication 11,
**caractérisé en ce**
**que** le piston d'injection (3) présente un piston (29) pouvant couvrir la fente annulaire (30).

13. Dispositif selon l'une quelconque des revendications 4 à 10,
**caractérisé en ce**
**que** le piston d'injection (3) présente une ou plusieurs rainures (28) qui s'étendent à l'état rétracté du piston d'injection (3) sur une longueur L dans la vis de plastification (8).

14. Dispositif selon la revendication 13,
**caractérisé en ce**
**que** les rainures (28) présentent une section en forme de U, 1 une section rectangulaire ou une section triangulaire et s'étendent essentiellement parallèlement à l'axe longitudinal du piston d'injection (3).

15. Dispositif selon l'une quelconque des revendications 1 à 14,
**caractérisé en ce**
**que** la vitesse de rotation de la vis de plastification (8) peut être augmentée d'une valeur significative pour la compensation de phénomènes de décompression lors du processus d'injection.

16. Dispositif selon l'une quelconque des revendications 1 à 15,
**caractérisé en ce**
**que** la vitesse de rotation de la vis de plastification (8) peut être déplacée d'une faible course vers l'avant pour la compensation de phénomènes de décompression lors du processus d'injection.
